# EUROPEAN PATENT APPLICATION

(11) **EP 1 655 913 A1**
(43) Date of publication of application: **10.05.2006**
(21) Application number: 05300889.2
(22) Date of filing: 04.11.2005
(51) Int. Cl.: H04L 12/56

(54) **Input queued packet switch architecture and queue service discipline**

(30) Priority: 09.11.2004 US 983732
(71) Applicant: Alcatel, 75008 Paris (FR)
(72) Inventor: Rabinovitch, Peter, K2K 2R1, Kanata (CA); Olesinski, Wladyslaw, K2M 2L9, Kanata (CA)
(74) Representative: Hervouet, Sylvie

(57) **Abstract**

A packet switching node architecture is described in accordance with which multiple packets queued in input queues are considered in selecting packets to be forwarded via idle output ports. Considering multiple queued packets reduces the probability that an output port remains idle and increases the probability that each input queue is serviced despite forwarding of packets being blocked by contention. Also described are processes for enqueuing packets into, and dequeuing packets from, input queues, each input queue having associated therewith a multitude of head-of-line registers pointing to a corresponding sequence of head-of-line queue entries. Enqueuing ensures that the correct head-of-line registers point, in sequence, to a sequence of head-of-line queue entries. Servicing each input queue removes queue entries from the sequence, and dequeuing ensures the resequencing of the head-of-line pointers. Advantages are derived from a reduced probability of an output port to remain idle, while the probability of servicing input queues is increased, thereby mitigating deleterious effects of contention and increasing the packet throughput.

## Description

### Field of the invention

The invention relates to packet switching node architectures, and in particular to input queued packet switching node architectures and queue service disciplines.

### Background of the invention

A substantial amount of the currently deployed packet switched infrastructure operates in accordance to a store-and-forward packet processing discipline. The ubiquitous Internet Protocol (IP) is an example of a packet transport protocol adhering to the store-and- forward discipline. Each IP packet has a packet header portion, and a payload portion having a variable length. Critical resources include: packet transport bandwidth on communications links interconnecting packet switching nodes, packet storage at packet switching nodes, and packet processing bandwidth at packet switching nodes.

Assuming ample storage being available at packet switching nodes, packets are conveyed over the interconnecting links subject to transport bandwidth being available on the interconnecting links, and packet processing bandwidth being available at the switching nodes to make packet forwarding decisions. The transport bandwidth available over the interconnecting links is expended in accordance with packet sizes, and packet processing bandwidth is expended in accordance with the number of packets processed at the packet switching nodes.

Transport bandwidth exhaustion is itself a topic of intense current research and development. Assuming, ample transport bandwidth over interconnecting links, efficient utilization of critical resources is dependent on the packet processing efficiency of packet switching nodes. For a given packet transport bandwidth available on the communication links connected to a packet switching nodes, the larger the proportion of large packets and the larger the packets, the less the number of packet headers and therefore less packet processing bandwidth is required to forward stored packets.

Conversely, the most stringent scenario is one in which a large number of small size packets are being processed by packet switching nodes. The most likely Internet traffic, web browsing, provisioned over an IP infrastructure typically generates sustained storms of minimum size (64Bytes) packets. Incidentally, the Asynchronous Transfer Mode (ATM) transport protocol is used to convey small packets having a fixed size (53Bytcs) which are know as ATM cells.

Queuing is very important to the field of packet switched communications and substantial research and development concerns queuing of packets at packet switching nodes. The function of a switching node is to match each packet received via an input port, with at least one output port for forwarding the packet therethrough. A basic issue concerning packet switching node design, relates to the location of the queues within the packet switching node: at ingress, at egress, and/or at a designed combination.

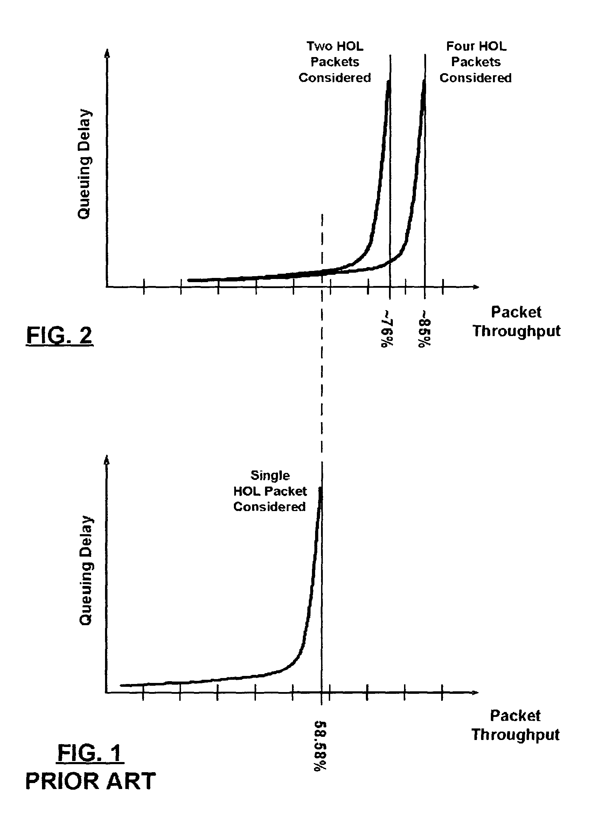

A comparative theoretical treatment of input queued packet switching node architectures and output queued packet switching node architectures is described by Karol, M., Hluchyj, M., and Morgan, S., in "Input versus output queuing on a space division switch", IEEE Trans. Communications, 35(12)(1987) pp. 1347-1356. Karol et al. conclude that output queued packet switching nodes require that the packet storage memory run at speeds which scale with the number of ports, speeds which are well beyond what is available given the linespeed of a typical number of interconnecting links connected to a typical packet switching node employed in a typical deployment. Also Karol et al. show that a First-In First-Out (FIFO) input queued packet switching node, with a single FIFO input queue per input port, has the disadvantage of being limited to a packet throughput of 58.58% for a large, desired, number of ports serviced, prior art result which is shown in FIG. 1. The calculated 58.58% theoretical packet throughput takes into account packet traffic comprised of small packets equally likely to require forwarding via each output port of the packet switching node. The probability that two packets queued on two different FIFO input queues but destined for the same output port during the same queue service cycle, creates contention for the output port, resulting in deferring the servicing of the second inspected queue to a subsequent queue service cycle. If incoming packet throughput at an input queued packet switching node increases above the 58.58% threshold, all input queues saturate and incoming traffic above the 58.58% threshold is discarded despite packet transport throughput being available at the outputs.

Other advances in the art include treatise by Tamir, and Y., Frazier, G. entitled "High performance multi-queue buffers for VLSI communication switches", Proc. of 15th Annual Symposium On Computer Architecture, June 1988, pp. 343-354, in which Tamir et al. describe what is now know as a Virtual Output Queued (VOQ) switch architecture, in accordance with which, multiple dynamically allocated queues corresponding to the multitude of output ports are associated with each input port. This is a very complex switch architecture to implement. The relevant result of the treatise, as it applies to the present description, is that 100% packet throughput is guaranteed, in theory, if the switching function operates with a speedup factor of 2 given the linespeed of the links connected to such a packet switching node.

While other variations of the above mentioned packet switch architectures have been the subject of intense research and development, a review of the literature shows that simple packet switch architectures such as input queued architectures and output queued architectures suffer from low packet throughput performance, while complex packet switch architectures such as virtual output queued architectures incur very large development, maintenance, and overhead costs due to the high complexity of such implementations.

There therefore is a need to for a packet switching node architecture which is simple to implement, and which provides improved packet throughput characteristics.

### Summary of the invention

In accordance with an aspect of the invention, a switching node architecture is provided. The switching node includes means for inspecting multiple head-of-line packets queued in input port queues to match queued head-of-line packets with idle output ports.

In accordance with another aspect of the invention, a packet switching node for switching packets received via a multitude of input ports to a multitude of output ports is provided. The packet switching node includes: a multitude of input queues for queuing packets received at the packet switching node; at least two head-of-line registers per input queue, each head-of-line register referencing a corresponding head-of-line packet queued in the corresponding input queue; and inspection means for inspecting the at least two head-of-line packets referenced by the at least two head-of-line registers in selecting a packet for transmission over a corresponding idle destination output port.

In accordance with a further aspect of the invention, a method of enqueuing received packets onto input queues is provided. Once packets arc queued in corresponding input queues, multiple head-of-line registers arc updated to point, in sequence, to corresponding of head-of-line queue entries.

In accordance with a further aspect of the invention, a method of enqueuing received packets at a packet switching node is provided. The method includes steps of: adding a packet to an input queue; inspecting a multitude of head-of-line registers, in sequence, to find a head-of-line register not referencing a packet; and storing packet reference information in the first found head-of-line register not referencing a packet.

In accordance with a further aspect of the invention, a method of forwarding packets queued in a plurality of input queues via a multitude of output ports of a packet switching node is provided. The method includes inspecting a multitude of head-of-line packets queued in each input queue in identifying a queued packet for which a corresponding destination output port is idle.

In accordance with a further aspect of the invention, a method of dequeuing packets selected for forwarding via idle output ports is provided. In removing packets from a queue, at least one head-of-line register is updated to restore sequential references to at lest one remaining head-of-line queue entry.

In accordance with yet another aspect of the invention, a method of dequeuing packets queued for processing in an input queue at a packet switching node is provided. The method includes steps of: determining whether a first destination output port via which a first head-of-line packet queued in the input queue is to be forwarded, is idle; if the first destination output port via which the first head-of-line packet queued in the input queue is to be forwarded is idle, assigning the packet to the first destination output port for forwarding therethrough, and removing the packet from the input queue; if the first destination output port via which the first head-of-line packet queued in the input queue is to be forwarded is busy, determining whether a second destination output port via which a subsequent head-of-line packet queued in the input queue behind the first head-of-line packet is to be forwarded, is idle; and if the second destination output port via which the subsequent head-of-line packet is to be forwarded is idle, assigning the subsequent packet to the second destination output port for forwarding therethrough, and removing the subsequent packet from the input queue.

Advantages arc derived from a reduced probability of an output port to remain idle during a service cycle, while the probability of servicing input queues is increased, thereby decreased blocking probability in mitigating deleterious effects of contention and increasing the packet throughput. Significant improvements to input queued architecture are provided by the proposed switch architecture while at the same time, the proposed architecture is much simpler than a common Virtual Output Queuing (VOQ) architecture, therefore offering a significant performance gain over simple input queuing techniques.

### Brief description of the drawings

The features and advantages of the invention will become more apparent from the following detailed description of the exemplary embodiments with reference to the attached diagrams wherein:
FIG. 1 is a schematic diagram showing prior art variance of queuing delay with packet throughput, and packet throughput saturation;
FIG. 2 is a schematic diagram showing, in accordance with an exemplary embodiment of the invention, the variance of queuing delay versus packet throughput with the number of head-of-line packets queued in input queues considered for forwarding via idle output ports;
FIG. 3 is a schematic diagram showing, in accordance with the exemplary embodiment of the invention, the architecture of an input queued switching node having a switching module considering a plurality of head-of-line packets queued in input ports for forwarding via idle output ports;
FIG. 4 is a flow diagram showing, in accordance with the exemplary embodiment of the invention, process steps performed in enqueuing received packets;
FIG. 5 is a flow diagram showing, in accordance with the exemplary embodiment of the invention, process steps performed in dequeuing packets from an input queue; and
FIG. 6 is a schematic diagram showing, in accordance with the exemplary embodiment of the invention, a switching module of a switching node considering multitudes of head-of-line packets queued in input queues for matching with idle output ports in accordance with two exemplary input queue service disciplines.

It will be noted that in the attached diagrams like features bear similar labels.

### Detailed description of the embodiments

Returning to the classic First-In First-Out (FIFO) input queued packet switching node architecture with a single FIFO input queue per input port, and particularly returning to the reason for experiencing queue saturation at a 58.58% packet throughput; it is realized that: the contention for output ports results in deferring the servicing of subsequently inspected queues to subsequent queue service cycles despite the probabilistic existence of other packets queued behind the head-of-line packet destined for idle output ports!

Therefore in accordance with the exemplary embodiment of the invention, the switching function of a packet switching node operating in accordance with the exemplary embodiment of the invention, in selecting packets for forwarding via idle output ports, also considers packets queued immediately behind the head-of-line packet in an input queue from which a packet was not selected for forwarding due to output port contention.

FIG. 2 shows the theoretical variance of packet throughput saturation with the number of head-of-line packets queued in input queues considered in selecting packets for forwarding via idle output ports given packet traffic comprised of small packets equally likely to require forwarding via each output port of the packet switching node. In particular, it is noted that by considering for matching with idle output ports two head-of-line packets queued in input queues, saturation is held off to about 76% packet throughput. By considering for matching with idle output ports four head-of-line packets queued in input queues, saturation is held off to about 85% packet throughput.

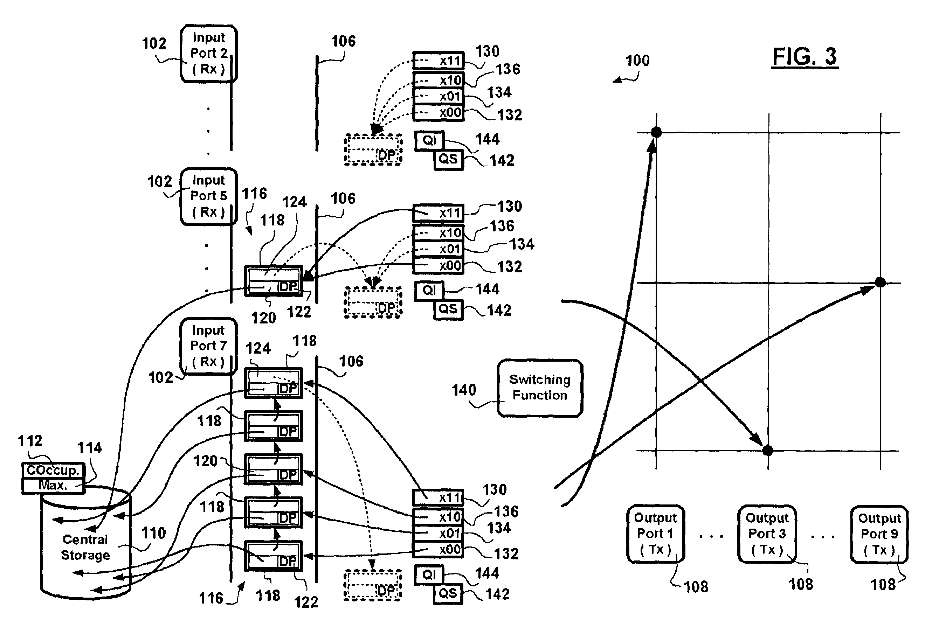

In accordance with an exemplary implementation of the exemplary embodiment of the invention having an exemplary architecture presented in FIG. 3, a switching module considers for matching with idle output ports a plurality of head-of-line packets queued in input port queues.

An exemplary packet switching node 100, has a plurality of input ports 102, servicing a plurality of communications links (not shown). Associated with each input port 102 is at least one input queue 106. Incoming packets are accepted at the packet switching node 100 subject to storage resources being available in an exemplary central storage 110. The occupancy of the central storage 110 is monitored via a current occupancy register 112, the value of which is: increased by the length of each accepted received packet, decreased by the length of each unicast packet transmitted via an output port 108, and decreased once by the length of each multicast packet after the packet has been transmitted via all corresponding destination output ports 108. Also associated with the central storage 110 is a maximum size register 114 specifying the size of the central storage 110. The invention is not limited to the described central storage 110 and applies equally well to other means of packet storage.

Different implementations of the input queues 106 may be used without limiting the invention thereto. The actual received packets are stored in the central storage 110, which typically includes random access memory, wherever storage space is available and not necessarily in an ordered fashion. In order to make an abstraction of packet lengths, which in practice may be fixed or variable, the exemplary implementation shown in FIG. 3, employs FIFO queues 106 implemented as linked lists 116 of packet descriptors 118. For the purposes of presenting the relevant principles herein, a packet descriptor 118 is a data structure having a packet storage address register 120 specifying the start memory address where a corresponding received packet is stored in the central storage 110, a Destination Port (DP) register 122 specifying at least one determined destination output port 108 via which the packet is to be forwarded, and a next descriptor register 124 specifying the storage address of a subsequent packet descriptor data structure 1 18 in the linked list 116. Implementation of the destination port register 122 varies and includes, without limiting the invention, a bit register wherein bits of the register correspond to output ports. Depending on the architecture of the packet switching node, logical output ports may be specified via the destination port register 122 as would be the case, for example, in respect of inverse multiplexing applications. A logical output port may be reserved for the loopback port.

Queue entry packet descriptors 118 are: created as each received packet is accepted; stored in an available storage location such as, but not limited to, a cache; and discarded as packets arc forwarded. A packet is said to be queued in an input queue 106 if a packet descriptor 118 pointing to the packet is an element of the linked list 116. It is understood that the ordered representation of packet descriptors 118 in the linked lists 116 shown in FIG. 3 is only representative as packet descriptors are themselves stored at various storage locations typically in a random access memory cache; the values stored in the next descriptor registers 124 point the various processes interacting with the input queues 106 towards subsequent descriptors 118 in the linked lists 116 and therefore to subsequent queued packets.

Associated with each input queue 106 is a last descriptor register 130 specifying the storage address of the last descriptor 118 corresponding to the last packet queued. The last descriptor register 130 may also be referred to herein as the queue tail pointer/register as it points to the last element of the linked list 116 of descriptors 118.

In accordance with the exemplary implementation of the exemplary embodiment of the invention shown in FIG. 3, three head-of-line descriptor registers 132/134/136 are associated with each input queue 106. Head-of-line packet descriptors 118 are created as needed and stored at various memory storage locations in a cache or the central storage 110 ― the use of the head-of-line descriptor registers 132/134/136 represent memory locations known to the switching function 140 for inspecting head-of-line packet descriptors 118. For simplicity, let us assume that the three head-of-line descriptor registers and the last descriptor register have consecutive memory addresses which specify the sequence of the head-of-line descriptor registers 132/134/136. Initially all four descriptor registers 130, 132, 134, and 136 are set to NULL values which signify that the corresponding input queue 106 is empty.

In operation, each input queue 106 is accessed by a packet reception process enqueuing packets, and a queue service process dequeuing packets.

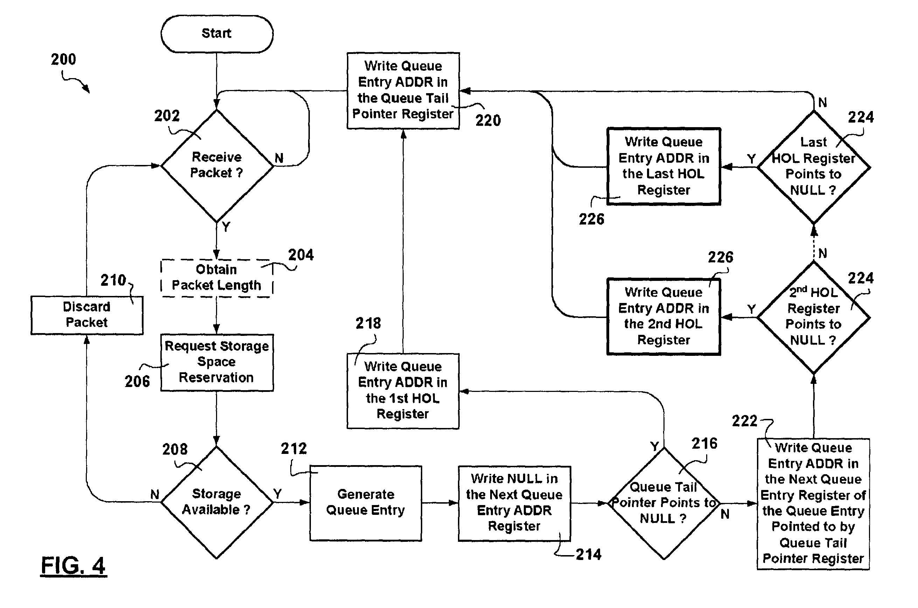

In accordance with the exemplary embodiment of the invention, a simplified exemplary packet reception process 200 is shown in FIG. 4. The packet reception logic waits 202 for a packet to arrive. If the packets conveyed are of variable length, the packet header is inspected, as the header of a packet is received, to obtain 204 the length of the packet. A request is sent 206 to the central storage 110 for memory storage to store the packet being received. If variable length packets are conveyed, then the request 206 also includes the length of the packet.

If the sum of the value of the current occupancy register 112 and the length of the packet is greater than the value of the maximum occupancy register 114, the central storage 110 informs the packet reception logic that insufficient storage is available 208 and the packet is discarded 210.

If storage is available 208, the central storage 110 provides the start memory address where the packet will be stored, and the packet reception logic employs special purpose means, outside the scope of the present disclosure, to store the packet starting at the provided memory storage address.

Having been informed of the start memory address where the packet is to be stored, the packet reception logic generates 212 an input queue entry 212 - a packet descriptor 118 - and sets the value of the packet storage address register 120 to the start memory address provided by the central storage 110. The next descriptor address register 124, which is to be used to point to the next queue entry, is set 214 to a NULL value.

Having generated a packet descriptor queue entry 118, and having stored at least the packet header in the central storage 110, search engine logic (not shown) is invoked, typically operating in parallel with the packet reception process 200, to determine at least one destination output port 108 for the packet. The operation of the search engine is described elsewhere.

Packet enqueuing, more particularly packet descriptor enqueuing steps include:
- determining 216 whether the input queue 106 is empty, which is signified by the queue tail pointer 130 pointing to NULL;
- if the queue is empty, the value of the fist head-of-line register 132 is set 218 to the address of the generated packet descriptor; and
- the value of the last descriptor register 130 (queue tail pointer) is also set 220 to storage address of the generated packet descriptor 118.
Both the queue tail pointer and the fist head-of-line packet register point to the received packet.

If the queue tail pointer 130 does not point to NULL 216, that is if the queue 106 is not empty, the memory storage address of the generated descriptor 118 is written 222 to the descriptor address register 124 of the last packet descriptor 118 in the queue 106 specified by the queue tail pointer 130, besides being written 220 to the queue tail register 130. This constitutes the process of enqueuing the received packet.

In accordance with the exemplary implementation of the exemplary embodiment of the invention, if the input queue 106 has more than one queued packet, the head-of-line registers 134 and 136 are inspected 224 in sequence. As soon as a head-of-line register 132/134 is found to point to NULL, the address of the generated packet descriptor is written 226 thereto.

Therefore, in accordance with the exemplary implementation of the invention, the enqueuing of packets in input queues 106 is performed in a distributed fashion by logic typically associated with each input port 102. The invention is not limited to distributed packet enqueuing, implementations are envisioned in which centralized packet enqueuing logic is employed, perhaps associated with packet classification and/or search functions.

The following description assumes that the search function, which typically operates in parallel with the packet enqueuing process 200, completes the determination of the at least one output port 108 via which the packet is to be forwarded, as the packet enqueuing process 200 completes. It is noted that the specification of the determined output port may be written to the destination port register 122 of the generated queue entry at any time during the execution of the packet enqueuing process 200 and after queue entry is generated 212. Alternatively, the packet enqucuing process 200 may be performed only after the output port determination is completed. As the packet is stored in the central storage 110 and the switching function 140 operates in parallel therewith; the enqueuing of packets, rather the enqueuing of packet descriptors 118, and the output port determination by the search function may complete before the full packet is received. Such and operation is desirable especially for long packets. The following description does not assume the reception of an entire packet.

In accordance with the exemplary implementation of the exemplary embodiment of the invention, during each service cycle, the switching function 140 takes into consideration three head-of-line packets queued in each input queue 106 in an attempt to match queued packets with idle output ports 108.

The invention is not limited to considering three head-of-fine packets queued in each input queue 106 during a service cycle. The number of packets considered is left to design choice: the lower the number of head-of-line packets considered, the simpler the implementation of the suggested architecture, and the lower the packet throughput saturation threshold; however the larger the number of head-of-line packets considered, the higher the packet throughput saturation. Considering that 85% packet throughput saturation is theoretically achievable by considering four head-of-line packets as shown in FIG. 2, a substantial improvement is achievable by considering a relatively small number of head-of-line packets while employing a novel architecture substantially simpler than the architecture of a VOQ switch.

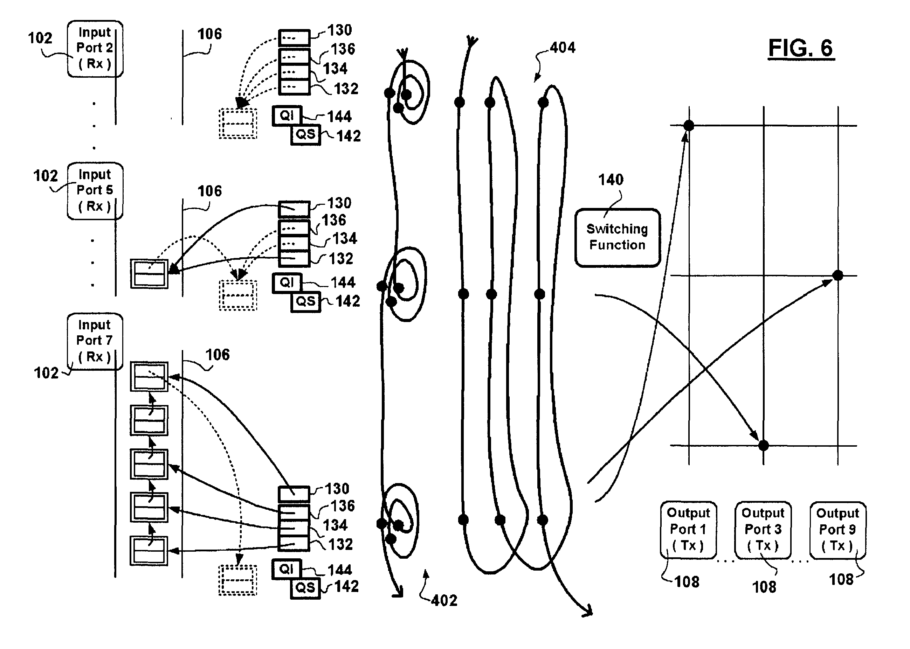

A service cycle is understood to include the processing performed by a switching function 140 between each cross-bar transfer for a switching node having a cross-bar architecture, or processing performed by a fair switching function during a service window between consecutive fairness assessments. The exemplary implementations of the embodiment of the invention described herein relate to exemplary cross-bar switching node architectures (shown in FIG. 3 and FIG. 6), without limiting the invention thereto.

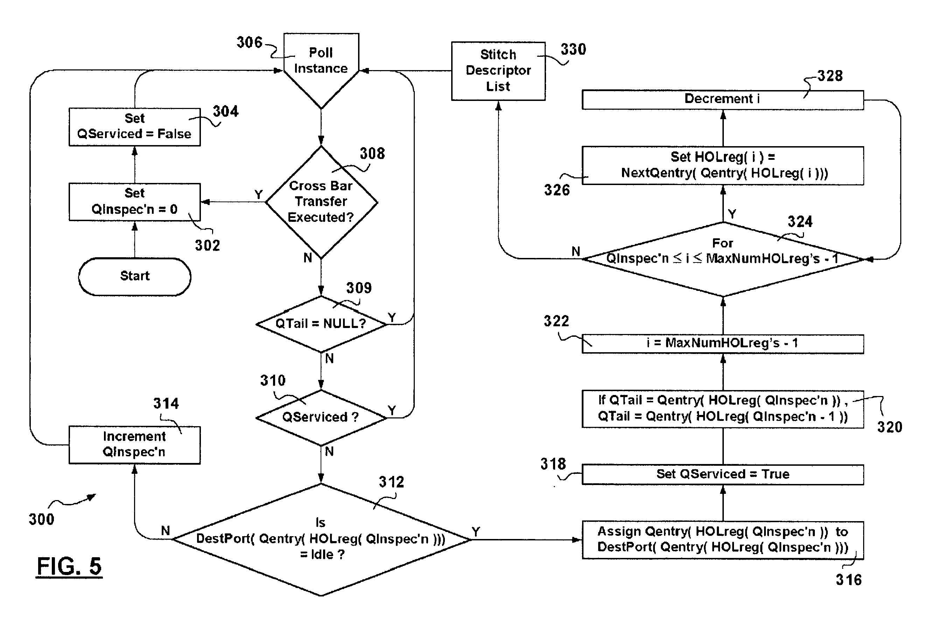

The switching function 140 preferably operates in parallel with packet reception, the search function, and the packet enqueuing process 200. In accordance with the exemplary implementation of the exemplary embodiment of the invention, such a separation and parallel operation is enabled via a minimal interaction between packet enqueuing process 200 and the exemplary packet dequeuing process 300 show in FIG. 5.

In accordance with the exemplary embodiment of the invention, the interaction between the switching function 140 and each input queue 106 is performed via the head-of-line registers 132/134/136, and limited to determining the packet descriptor 118 specified (pointed to) by a head-of-line register 132/134/136 and obtaining the destination output port specified (122) in the descriptor 118. In accordance with an exemplary implementation of the exemplary embodiment of the invention, each input queue 106 is polled by the switching function 140, during a service cycle, for a packet specified in one of the multiple head-of-line descriptors 118 to determine whether the packet is destined for an idle output port 108.

In accordance with the exemplary embodiment of the invention, the switching function 140 polls 306 logic executing the packet dequeuing process 300 for packets to forward via idle output ports 108. The flow diagram shown in FIG. 5, will be described herein with reference to a single input queue 106. However, centralized implementations of the invention are envisioned wherein, steps of the packet dequeuing process 300 take into account input queue identifiers and the switching function 140 prefaces its polling with input queue identifiers. Implementations are also envisioned wherein the switching function 140 itself executes the packet dequeuing process 300.

In accordance with the exemplary implementation the exemplary embodiment of the invention, the packet dequeuing logic tracks the number of queue inspections (QInspec'n) since the last cross-bar transfer, and whether the input queue 106 was serviced (QServiced) since the last cross-bar transfer. At start-up, the value of a QInspec'n register (QI 144) is set 302 to zero and the Boolean value of a QServiced register (QS 142) is set 304 to logic "FALSE". Implementations arc envisioned in which each input port queue poll request provides an indication whether a cross-bar transfer was executed since last poll request. Implementations are also envisioned wherein input port queue poll requests and cross-bar transfer execution announcements arc sent separately to the packet dequeuing logic. It is understood that for switching node architectures which do not include a cross-bar, a signal is provided to the packet dequeuing logic signifying the start of each service cycle.

Responsive to each input queue poll request 306, the dequeuing process 300 resets 302/304 QI 144 and QS 142 registers, respectively, if a cross-bar transfer was executed 308 since the last input queue poll request 306. For each input queue poll request 306, if the input queue 106 has not been serviced 310, and has at least one queue entry 309, the dequeuing logic determines 312 whether the destination port specified 122 in the head-of-line queue entry descriptor 118 referenced by one of the head-of-line register 132/134/136 is idle. The value of the QInspec'n register 144 is used to select each head-of-line register 132/134/136 in sequence in processing each poll request 306.

If the destination output port is not idle 312, then the value of the QInspec'n register 144 incremented 314, and the dequeuing logic awaits for another input port queue poll request 306.

If the destination output port 108 is idle 312, then the switching function 140 assigns 316 the descriptor 118 to the output port 108 and the packet is said to be matched with the output port 108. The switching function 140 is free to service other input queues 106 subject to a service discipline described herein below. The QServiced register 142 is set to logic "TRUE". If the QTail register 130 specifies 320 address of the assigned descriptor 118, the descriptor 188 is the last in the descriptor list 116, and the queue tail register 130 must be updated 320 with the address of descriptor immediately in front, that is the value held in the previous head-of-line register. It is understood that if the input port queue 106 had only one descriptor 118 which was assigned to an idle output port 108, setting the QTail register 130 to the value specified by the head-of-line register previous to the head-of-line register 132, means setting the QTail register 130 to NULL signifying that the input port queue 106 is now empty.

A packet forwarding process, described elsewhere, uses the information specified in the packet descriptor 118 to access the packet stored in the central storage 110. For greater certainty, in accordance with the switching node architecture described, the possibility exists for a packet to be assigned to a destination output port 108, and have begun forwarding therethrough, while the packet is still being received. Conversely, implementations and applications requirements may require that the integrity of packets be checked at each packet switching rode. For such implementations, packets would have to be received in their entirety and packet integrity tests would have to be performed thereon. For long packets, it may be that a single contiguous chunk of memory storage is not available in the central storage 110. Such long packets would be segmented and each packet segment would have a packet segment descriptor associated therewith. Means are provided for stringing packet segment descriptors together.

The packet forwarding process would also take the necessary steps to free the storage space in the central store 110 once a unicast packet is forwarded, or after a multicast packet was forwarded via all destination ports. The packet forwarding process would also take the necessary steps to free the memory used by the packet descriptor 118.

Returning to the operation of the dequeuing process 300, in accordance with the exemplary embodiment of the invention, the head-of-line registers 132/134/136 have to be updated to correctly reference remaining head-of-line packet descriptors 118 with the matched packet descriptor 118 removed from the linked list 116. Steps 322 to 330 of the dequeuing process 300 show a process loop in which, subject to the value of the QInspec'n register 144, each head-of-line register, going from the back towards the front of the queue 106 ending with the head-of-line register specified by the QInspec'n register value, is set to the next descriptor address value specified in the next descriptor register 124 of the descriptor 118 pointed to by that particular head-of-line register. It is understood that if a head-of-line register points to the NULL descriptor, the next descriptor value of the next descriptor register of the NULL descriptor is NULL.

Once a packet is assigned to an output port 108, all packets/descriptors 118 queued behind must "advance" in the queue 106. The use of linked lists 116 in implementing the input port queues 106 greatly simplifies "advancing": the next descriptor specification 124 of the descriptor 118 in front of the matched packet descriptor 118, must be modified to point to the descriptor 118 behind the matched packet descriptor 118, that is the matched packet descriptor 118 is removed from the linked list 116 and the remaining linked list 116 must be stitched back together 328.

It was pointed out that the exemplary implementation of the dequeuing process 300 shown in FIG. 5, is responsive to input queue polling 306. The switching function 140 implements a queue service discipline in accordance with which the switching function 140 polls 306 each input queue 106. Typically queue service disciplines attempt to: enforce service fairness, to prioritizc special packet traffic, etc. Queue servicing is a current topic of research and development, with current achievements described elsewhere. FIG. 6 shows the switching function 140 operating in accordance with two exemplary queue service disciplines: queue service discipline 402 prioritizes servicing each input queue 106 trying to enforce fairness by attempting to transfer a packet from each input port 102 during each service cycle, whereas queue service discipline 404 prioritizes servicing the oldest packets queued in each input queue 106. In accordance with the exemplary embodiment of the invention, the queue service discipline 402 inspects all head-of-line descriptors 118 in sequence in attempting to service each input queue 106. In accordance with the exemplary embodiment of the invention, the queue service discipline 404 inspects all head-of-line registers 132 of all input queues 106 before inspecting all head-of-line registers 134 of all input queues 106, etc. The invention is not limited to the exemplary queue service disciplines 402 and 404 shown, implementations are envisioned in accordance with which queue servicing is engineered for specific applications. While the exemplary queue service disciplines 402 and 404 inspect head-of-line descriptors 118 in an orderly fashion, implementations are envisioned wherein the head-of-line descriptors 118 are inspected in a random fashion.

For greater certainty, the packet order would be maintained for packets forwarded by a switching node operating in accordance with the exemplary embodiment of the invention, because a packet queued behind another can only be selected for forwarding over an older packet unable to be forwarded via a busy output port 108, only if the selected packet is destined to a different output port 108, and hence constituent of a different flow of packets.

While packet classification was only mentioned in passing, it is understood that the invention also applies to implementations in which a group of input queues 106 are associated with at least one input port 102. Each input queue 106 in the group of input queues associated with the at least one input port 102 corresponds to one of: a Class-of-Service level queue, a Type-of-Service level queue, a Quality-of-Service level queue, a Virtual Local Area Network designation queue, etc. Received packets arc associated with corresponding input queues 106 in the group as determined by the packet classifier (not shown). The packet classifier classifies received packets in accordance with one of: a Class-of-Service, a Type-of-Service, a Quality-of-Service, and a Virtual Local Area Network designation. Further, in accordance with such an implementation, the switching function 140 would operate in accordance with a queue service discipline which takes in to account the fact that multiple input queues 106 are associated with each input port 102.

Implementations are envisioned in which an input queue 106 is associated with a multitude of input ports 102, an arrangement typically used in inverse multiplexing.

In accordance with the exemplary embodiment of the invention, a chance is provided for an input queue 106 to be serviced during a service cycle despite the fact that the head-of-line packet queued in the queue 106 cannot be forwarded due to contention. The proposed packet switching node architecture is based on the simple input queued switch architecture modified to enable the switching function 140 of the switching node to consider several head-of-line packets queued in input queues. In the present description, extensive reference was made to input port queues, the invention is not limited to input port queues and can be applied to generic input queues. Implementations are envisioned in which received packets are queued in input port queues, from which a packet classifier classifies packets into input queues which operate in accordance with the exemplary embodiment of the invention.

In accordance with the exemplary embodiment of the invention, the throughput performance of a packet switching node can be subject to a complexity/throughput tradeoff decision thereby providing a packet switching node architecture tunable to application requirements. By changing the number of head-of-line packets considered as candidates for forwarding via output ports, the limiting packet saturation throughput can be changed. And, by considering four head-of-line packets queued in input queues, the theoretical packet throughput saturation threshold is held off to about 85% packet throughput. Conversely, by considering a sufficient number of head-of-line queue packets, the performance of the proposed packet switch may approach that of VOQ switches at a much lower cost and complexity.

The above results have been noted while employing the simplest possible arbitration algorithms (queue service disciplines), by inspecting input queues in a round robin manner, or examining head-of-line packets from oldest received to newest. By using more efficient arbitration algorithms, even higher packet throughput performance can be expected.

The embodiments presented are exemplary only and persons skilled in the art would appreciate that variations to the above described embodiments may be made without departing from the spirit of the invention. The scope of the invention is solely defined by the appended claims.

## Claims

1. A packet switching node for switching packets received via a plurality of input ports to a plurality of output ports, the packet switching node comprising:
a. a plurality of input queues for queuing packets received at the packet switching node;
b. at least two head-of-line registers per input queue, each head-of-line register referencing a corresponding head-of-line packet queued in the corresponding input queue; and
c. inspection means for inspecting the at least two head-of-line packets referenced by the at least two head-of-line registers in selecting a packet for transmission over a corresponding idle destination output port.

2. The packet switching node claimed in claim 1, further comprising a queue inspection register tracking the number of times the input queue was inspected during a service cycle, the value of the queue inspection register being used to access the at least two head-of-line registers in sequence.

3. The packet switching node claimed in claim 2, further comprising a queue service register specifying whether a packet queued in the input queue was matched with a corresponding destination output port during each service cycle, further inspection of the input queue for packets to match with idle ports being suppressed for the duration of the service cycle after the input queue has been serviced.

4. The packet switching node claimed in claim 1, each input queue being one of: an input queue associated with a single input port; an input queue associated with a subgroup of the plurality of input ports; and one of a group of input queues, the group of input queues being associated with at least one input port.

5. The packet switching node claimed in claim 4, wherein the packet switching node having the group of input queues are associated with the at least one input port, the packet switching node further comprising a packet classifier for classifying received packets in one of the group of input queues.

6. The packet switching node claimed in claim 5, wherein each input queue in the group of input queues associated with the at least one input port corresponds to one of: a Class-of-Service level queue, a Type-of-Service level queue, a Quality-of-Service level queue, and a Virtual Local Area Network designation queue; the packet classifier classifying packets received at the packet switching node in accordance with one of: a Class-of-Service, a Type-of-Service, a Quality-of-Service, and a Virtual Local Area Network designation.

7. The packet switching node claimed in claim 1, further comprising packet switching means and input queue service sequencing means, the inspection means being responsive to the packet switching means.

8. The packet switching node claimed in claim 1, further comprising packet descriptors for tracking corresponding packets received at the packet switching node.

9. The packet switching node claimed in claim 8, further comprising:
a. a memory storage for storing received packets; and
b. each packet descriptor further comprising a start storage memory address register for specifying the start memory storage address at which the corresponding packet is stored in the memory storage while pending processing.

10. The packet switching node claimed in claim 9, further comprising:
a. a search engine for determining at least one output port for forwarding at least one received packet therethrough; and
b. each packet descriptor further comprising a destination output port register for specifying at least one output port for forwarding the corresponding packet therethrough.

11. The packet switching node claimed in claim 10, wherein the destination output port register has a bit representation, wherein each bit corresponds to a destination output port selected from: a physical output port, a logical output port associated with a subgroup of the plurality of output ports, and a logical loopback port.

12. The packet switching node claimed in claim 10, wherein each input queue is defined by a sequenced list of descriptors, each descriptor further comprising a next packet descriptor register specifying a packet descriptor reference, each head-of-line register specifying a reference to a corresponding head-of-line packet descriptor.

13. A method of enqueuing packets received at a packet switching node, the method comprising:
a. adding a packet to an input queue;
b. inspecting a plurality of head-of-line registers in sequence to find a head-of-line register not referencing a packet; and
c. storing packet reference information in the first found head-of-line register not referencing a packet.

14. The method claimed in claim 13, wherein a packet descriptor is employed in referencing a corresponding packet pending processing at the packet switching node, the method comprising:
a. adding to the input queue a packet descriptor corresponding to each received packet;
b. inspecting a plurality of head-of-line registers in sequence to find a head-of-line register not referencing a valid packet descriptor; and
c. setting the value of the first found head-of-line register not referencing a valid packet descriptor to reference the packet descriptor added to the input queue.

15. A method of forwarding packets queued in a plurality of input queues via a plurality of output ports of a packet switching node, the method comprising inspecting a plurality of head-of-line packets queued in each input queue in identifying a queued packet for which a corresponding destination output port is idle.

16. A method of dequeuing packets queued for processing in an input queue at a packet switching node, the method comprising:
a. determining whether a first destination output port via which a first head-of-line packet queued in the input queue is to be forwarded, is idle;
b. if the first destination output port via which the first head-of-line packet queued in the input queue is to be forwarded is idle, assigning the packet to the first destination output port for forwarding therethrough, and removing the packet from the input queue;
c. if the first destination output port via which the first head-of-line packet queued in the input queue is to be forwarded, is busy, determining whether a second destination output port via which a subsequent head-of-line packet queued in the input queue behind the first head-of-line packet is to be forwarded, is idle; and
d. if the second destination output port via which the subsequent head-of-line packet is to be forwarded is idle, assigning the subsequent packet to the second destination output port for forwarding therethrough, and removing the subsequent packet from the input queue.

17. The method claimed in claim 16, wherein each determination as to whether a destination output port is idle is performed responsive to a service request, the method further comprising:
a. tracking the number of service requests received during an input queue service cycle; and
b. selecting a head-of-line packet for matching with a corresponding destination output port based on the cumulative number of queue service requests received during each service cycle.

18. The method claimed in claim 16, wherein head-of-line packets are accessed via a plurality of head-of-line registers referencing corresponding head-of-line packets queued in the input queue, the method further comprising updating references to head-of-line packets specified in head-of-line registers behind and including the head-of-line register corresponding to the head-of-line packet which was matched with a corresponding idle destination output port.
